# EUROPÄISCHE PATENTSCHRIFT

(11) **EP 1 657 393 B1**
(45) Veröffentlichungstag und Bekanntmachung des Hinweises auf die Patenterteilung: **19.03.2014**
(21) Anmeldenummer: 04405700.8
(22) Anmeldetag: 12.11.2004
(51) Int. Cl.: E05F 15/14

(54) **Vorrichtung mit steuerbaren Trennelementen und Steuerverfahren**
Device with controlable partition elements and control method.
Dispositif avec des éléments de cloison de séparation contrôlable et procédé de commande

(43) Veröffentlichungstag der Anmeldung: 17.05.2006
(73) Patentinhaber: HAWA AG, 8932 Mettmenstetten (CH)
(72) Erfinder: Haab, Gregor, 6340 Baar (CH); Wüthrich, Hans, 8907 Wettswil (CH); Odermatt, Marco, 6370 Stans (CH)
(74) Vertreter: Rutz & Partner

(56) Entgegenhaltungen:
- EP-A- 0 953 706

## Beschreibung

Die Erfindung betrifft eine Vorrichtung mit steuerbaren Trennelementen sowie ein der Steuerung der Trennelemente einer solchen Vorrichtung dienendes Verfahren.

Zum Trennen oder Gestalten von Räumen oder zum Abschliessen von Raum- oder Fensteröffnungen werden oft Glas- oder Holzwände, Kulissen, Türen oder Läden verwendet, nachstehend als Trennelemente bezeichnet, die an entlang einer Laufschiene verschiebbaren Laufwerken befestigt und gegebenenfalls drehbar gelagert und/oder stapelbar bzw. parkierbar sind. Insbesondere in öffentlichen Gebäuden, Geschäftshäusern und Hotels werden Vorrichtungen mit Trennelementen verwendet, deren Laufwerke mit Elektromotoren ausgerüstet sind, die mittels einer Steuereinheit steuerbar sind. Um in einfacher Weise mehrere Trennelemente steuern zu können, wird vorzugsweise eine zentrale Steuereinheit vorgesehen, die mit lokalen Steuereinheiten, die mit den Trennelementen verbunden sind, Daten austauscht. Der Datenaustausch kann drahtlos oder über die für den Antrieb der Elektromotoren vorgesehene Stromversorgungsleitung erfolgen.

Aus der EP 0 953 706 A1 ist eine Vorrichtung bekannt, bei der der Antriebsmotor und die Steuereinheit innerhalb des Tragprofils des Trennelements angeordnet sind. Bei dieser Vorrichtung werden die in das Trennelement integrierten Elektromotoren mittels einer Wechselspannung gespeist. Die Übertragung der Steuersignale erfolgt mittels Modulation und Demodulation eines Trägersignals. Übertragungs- und Steuervorrichtungen dieser Art basieren auf bewährten, meist standardisierten Modulen, deren Kosten aufgrund der starken Verbreitung vergleichsweise tief sind.

Für den Betrieb sind die bekannten Vorrichtungen entsprechend den vorliegenden Konfigurationen zu initialisieren, zu programmieren und zu parametrieren. Meist sind die lokalen Steuereinheiten mit Schaltergruppen versehen, mittels derer den Trennelementen bzw. den lokalen Steuereinheiten Adressen zugeordnet werden. Ferner sind die Anzahl der Trennelemente und deren Breite einzugeben, wonach in Abhängigkeit der Fahrgeschwindigkeiten und der Fahrwege innerhalb und ausserhalb eines Parkraumes oder Bahnhofs, in dem die Trennelemente gestapelt gespeichert werden, die Abfahrtzeiten der Trennelemente für das Öffnen und Schliessen derart berechnet werden, dass keine Kollisionen auftreten. Dieser Vorgang zur Initialisierung der Vorrichtung ist jeweils mit relativ hohem Aufwand verbunden.

Der vorliegenden Erfindung liegt nun die Aufgabe zugrunde, eine einfachere und weiter verbesserte Vorrichtung und ein entsprechendes Steuerverfahren zu schaffen.

Die Vorrichtung soll kostengünstiger realisierbar und mit reduziertem Aufwand initialisierbar sein und eine störungsfreie Kommunikation zwischen der zentralen Steuereinheit und den dezentralen Steuereinheiten gewährleisten.

Diese Aufgabe wird mit einer Vorrichtung und einem Verfahren gelöst, welche die in Anspruch 1 bzw. 8 angegebenen Merkmale aufweisen. Vorteilhafte Ausgestaltungen der Erfindung sind in weiteren Ansprüchen angegeben.

Die Vorrichtung weist wenigstens ein steuerbares Trennelement auf, das mittels eines in einer Schiene geführten Laufwerks gehalten und mittels eines Elektromotors angetrieben wird, der mittels einer stationären zentralen Steuereinheit und einer mit dem Trennelement verbundenen lokalen Steuereinheit steuerbar ist, die Daten über eine in der Schiene vorgesehene elektrische Leitung austauschen, die der Stromversorgung des Elektromotors dient.

Erfindungsgemäss ist in der zentralen Steuereinheit eine erste Gleichspannung vorgesehen, die mit der Stromversorgungsleitung über einen zentralen Schalter verbindbar ist, der von einer zentralen Sendeeinheit in Abhängigkeit der von der zentralen Steuereinheit zur lokalen Steuereinheit zu übertragenden Daten betätigbar ist. In der lokalen Steuereinheit ist eine lokale Empfangseinheit vorgesehen ist, die der Detektion von Änderungen der an der Stromversorgungsleitung anliegenden Spannung geeignet ist. Dazu kann ein Komparator verwendet werden. Diese detektierten Änderungen werden entsprechend einem ersten Übertragungsprotokoll anhand eines lokalen Prozessors in die entsprechenden Daten gewandelt. Entsprechend den empfangenen Daten bzw. Instruktionen ist vom lokalen Prozessor ein Schalter betätigbar, mittels dessen die an der Stromversorgungsleitung anliegende Spannung dem Elektromotor zuführbar ist.

Die in der zentralen Steuereinheit vorgesehene erste Gleichspannung, die primär der Stromversorgung der Elektromotoren dient, kann anhand eines kostengünstigen Stromversorgungsteils, beispielsweise mittels eines Netzteils erzeugt werden, dem eine Wechselspannung vorgegebener oder beliebiger Grösse zuführbar ist. Für die Datenübertragung zwischen der zentralen und der wenigstens einen lokalen Steuereinheit, werden keine Trägersignale und entsprechende Generatoren benötigt. Die Übertragung erfolgt sende- und empfangsseitig mit einfachen Mitteln vorzugsweise im Basisband. Die Reduktion der Kosten der Vorrichtung wird daher erzielt, indem komplexe Übertragungsvorrichtungen, wenn auch standardisiert und daher kostengünstig, durch einfache Stromversorgungsvorrichtungen und einfache Übertragungsmittel ersetzt werden, die mittels kostengünstigen Single-Chip-Prozessoren, beispielsweise der Familie PIC 1X der Firma Microchip (siehe http://www.microchip.com) betrieben werden können.

In der lokalen Steuereinheit, die vorzugsweise ebenfalls mit wenigstens einem Single-Chip-Prozessor ausgerüstet ist, ist eine lokale Sendeeinheit vorgesehen, mittels der, während Intervallen, in denen der zentrale Schalter geöffnet ist, über die Stromversorgungsleitung Daten zu einer in der zentralen Steuereinheit vorgesehenen zentralen Empfangseinheit übertragbar sind. Die der Lieferung der ersten Gleichspannung dienende Gleichspannungsquelle, die einen tiefen Innenwiderstand aufweist und die die Datenübertragung von der lokalen zur zentralen Steuereinheit beeinflussen würde, ist während diesem Übertragungsintervall abgetrennt.

Eine Übertragung von Daten von der lokalen zur zentralen Steuereinheit ist in beliebiger Weise möglich. Besonders vorteilhaft kann diese Übertragung jedoch realisiert werden, indem in der zentralen Steuereinheit eine zweite Gleichspannung über einen zentralen Widerstand mit der Stromversorgungsleitung verbunden wird, an die in der lokalen Steuereinheit ein lokaler Widerstand mittels eines zweiten lokalen Schalters zuschaltbar ist, der von der lokalen Sendeeinheit in Abhängigkeit der zu übertragenden Daten betätigbar ist. Durch die über die Stromversorgungsleitung miteinander verbundenen lokalen und zentralen Widerstände wird daher, nach dem Schliessen des lokalen Schalters, ein Spannungsteiler gebildet, an dem in der zentralen Steuereinheit eine Spannung anliegt, die tiefer ist als die zweite Gleichspannung. Änderungen der Spannung am Spannungsteiler, die den übertragenen Daten entsprechen, können daher in der zentralen Steuereinheit detektiert werden. Die Detektion von Spannungsänderungen in der zentralen oder lokalen erfolgt vorzugsweise mittels eines Komparators, beispielsweise mittels eines Operationsverstärkers, an dessen Eingängen die zu detektierenden Signale und eine Referenzspannung anliegen.

Die an der Stromversorgungsleitung anliegende Spannung wird in der lokalen Steuereinheit vorzugsweise über eine Diode an einen Kondensator angelegt, der über den ersten lokalen Schalter mit dem Elektromotor verbindbar ist. Der Kondensator dient daher der unterbruchsfreien Stromversorgung des Elektromotors. Der Kondensator wird auf die Höhe der ersten Gleichspannung geladen und liefert während Intervallen, in denen der zentrale Schalter geöffnet und die erste Gleichspannung von der Stromversorgungsleitung getrennt ist, die notwendige Betriebsspannung. Die Diode trennt während Intervallen, in denen der zentrale Schalter geöffnet ist, den Kondensator von der Stromversorgungsleitung. Dies könnte mit grösserem Aufwand auch mittels eines Schalters geschehen.

Der Elektromotor ist mit einem Sensor, gegebenenfalls einem Hallsensor, versehen, mittels dessen die Drehungen und die Drehrichtung des Rotors und somit der zurückgelegte Weg des Trennelements und das Auftreffen auf ein Hindernis, einen Endanschlag oder ein benachbartes Trennelement, feststellbar sind. Die erfindungsgemässe Vorrichtung und das Verfahren erlauben daher, trotz des einfachen Aufbaus der Vorrichtung, eine präzise individuelle Steuerung von allen zugeschalteten Trennelementen, so dass diese über vorgesehene Strecken verschoben, gegeneinander und auseinander sowie in einen und aus einem Parkraum oder Bahnhof gefahren werden können.

Die Datenübertragung zwischen der zentralen und der lokalen Steuereinheit kann synchron oder asynchron erfolgen. Beispielsweise werden den lokalen Steuereinheiten Zeitfenster statisch oder dynamisch zugeordnet, während denen beispielsweise zyklisch oder nach Abfrage Daten zur zentralen Steuereinheit übertragen werden. Die Daten werden beispielsweise innerhalb von Protokollrahmen, die Start- und Stopp-, gegebenenfalls Parity-Bits aufweisen, zwischen den Steuereinheiten ausgetauscht. Zur Übertragung eines Startbits wird vorzugsweise der zentrale Schalter geöffnet. Nach Detektion des Startbits und für die Dauer des Startbits kann die lokale Steuereinheit daher durch Öffnen und Schliessen des zweiten lokalen Schalters Daten zur zentralen Steuereinheit übertragen. Die Daten werden vorzugsweise entsprechend einem vorgegebenen Protokoll übertragen und gegebenenfalls codiert. Ein Datenrahmen oder Datenpaket kann beispielsweise ein Startbit, acht Datenbits, ein Parity-Bit und zwei Stoppbits aufweisen. Innerhalb des Rahmens können ferner eines oder mehrere Bits für die Nutzung durch die lokalen Steuereinheiten reserviert werden.

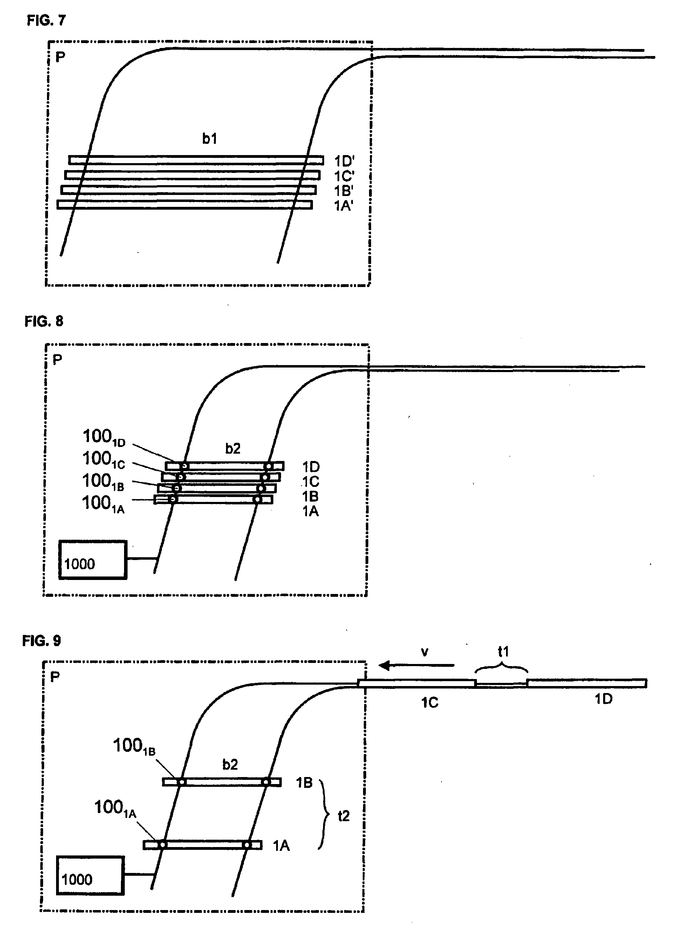

Bei der Initialisierung erfindungsgemässer oder beispielsweise aus der EP 0 953 706 A1 bekannter Vorrichtungen sind verschiedene Parameter zu beachten, um ein möglichst rasches Ausfahren und Einfahren der Trennelemente zu erzielen und gleichzeitig Kollisionen bei der Ausfahrt aus einem Parkraum zu vermeiden. Ein Vergleich der Figuren 7 und 8 zeigt, dass für die Ausfahrt aus einem Parkraum P benötigte Zeit wesentlich durch die Breite b1, b2 der Trennelemente 1A, ..., 1D; 1A' , ..., 1D' bestimmt wird. Die in Figur 7 gezeigten Trennelemente 1A', ..., 1D' benötigen deutlich mehr Zeit als die in Figur 8 gezeigten Trennelemente 1A, ..., 1D. Nebst der Breite b1, b2 der Trennelemente 1 sind beispielsweise die Fahrgeschwindigkeiten innerhalb und ausserhalb des Parkraums, die Abstände innerhalb des Parkraums, die Abstände beim Öffnen und Schliessen und der Verlauf der Schienen 3 zu berücksichtigen. Besonders aufwendig gestaltete sich die Initialisierung bisher, wenn Trennelemente 1 mit unterschiedlichen Breiten b1, b2 verwendet wurden. Die Initialisierung jeder Vorrichtung, die nach den Spezifikationen des Anwenders geliefert wurde, erfordert daher die korrekte Berücksichtigung aller relevanten Faktoren.

Anhand des erfindungsgemässen Verfahrens kann die Initialisierung der Vorrichtung jedoch wesentlich einfacher und ohne die Ermittlung und Eingabe der genannten Parameter durchgeführt werden.

Nachfolgend wird die Erfindung anhand von Zeichnungen näher erläutert. Dabei zeigt:
- Figur 1: eine Vorrichtung mit wenigstens einem steuerbaren Trennelement 1, das von einem in einer Schiene 3 geführten Laufwerk 2 gehalten und mittels eines Elektromotors 15 angetrieben ist, der mittels einer zentralen Steuereinheit 1000 und einer lokalen Steuereinheit 100 steuerbar ist;
- Figur 2: das elektrische Schaltbild der Vorrichtung in einer ersten Konfiguration;
- Figur 3: das elektrische Schaltbild der Vorrichtung in einer zweiten Konfiguration;
- Figur 3a: eine zentrale Empfangseinheit 1003 in vorzugsweiser Ausgestaltung;
- Figur 4: den Verlauf der Spannung an der Stromversorgungsleitung 110 während der bidirektionalen Übertragung von Daten;
- Figur 5: Datenrahmen bei asynchroner Datenübertragung;
- Figur 6: Datenrahmen bei synchroner oder semi-synchroner Datenübertragung;
- Figur 7: breite in einen Parkraum eingefahrene Trennelemente 1A' , ..., 1D' ;
- Figur 8: schmale in einen Parkraum eingefahrene Trennelemente 1A, ..., 1D;
- Figur 9: die Trennelemente 1A, ..., 1D von Figur 8 während der Initialisierung der Vorrichtung.

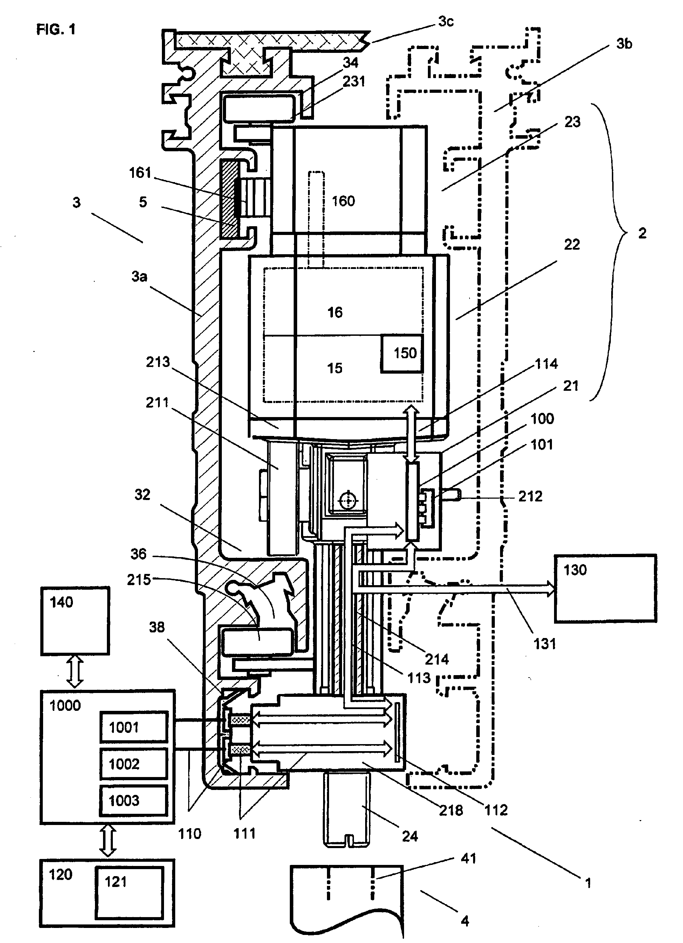

Figur 1 zeigt eine Vorrichtung mit einem Trennelement, dessen Laufwerk in der europäischen Patentanmeldung Nr. 04405607 beschrieben ist. Der Gegenstand dieser Patentanmeldung wird durch Bezugnahme in die vorliegende Anmeldung aufgenommen. Das in Figur 1 gezeigte Laufwerk 2, das mittels zwei Laufrädern 211 auf einer Lauffläche 32 einer Schiene 3 sowie mit Führungsrädern 215, 231 in Kanälen 34, 36 der Schiene 3 geführt und mittels einer Lastwelle 24 und einer Befestigungsvorrichtung 41 beispielsweise mit einer Holz-, Kunststoff- oder Glasplatte 4 verbunden ist, weist eine mittels eines Elektromotors 15 und eines Getriebes 16 angetriebene Antriebswelle 160 auf, die mittels eines Zahnrads 161 mit einem in der Schiene 3 vorgesehenen Zahnriemen 5 gekoppelt ist. Das Laufwerk 2 weist eine Fahrwerkseinheit 21 auf, in der die aus dem Laufwerk 2 hinaus, vertikal nach unten geführte Lastwelle 24 und dazu senkrecht stehende Wellen 212 für die Laufräder 211 gehalten sind. An der Oberseite weist die Fahrwerkseinheit 21 ein Kopfstück 213 auf, das mit einer Antriebseinheit 22 verbunden ist, in der der Elektromotor 15 und das Getriebe 16 derart angeordnet sind, dass die Antriebswelle 160 aus dem Laufwerk 2 hinaus, vertikal nach oben geführt ist, so dass das auf die Antriebswelle 160 aufgesetzte Zahnrad 91 in den oberhalb der Lauffläche 12 der Schiene 1 gehaltenen Zahnriemen 51 eingreift. Auf die Antriebseinheit 22 ist eine Führungseinheit 23 aufgesetzt, die das obere Führungsrad 231 hält.

Die Fahrwerkseinheit 21 ist an deren Unterseite ferner mit einem Kontaktierungsmodul 218 mit darin gehaltenen Kontaktstiften 111 versehen, die entlang einer in einem Kanal 38 der Schiene angeordneten Stromversorgungsleitung 110 geführt werden und diese kontaktieren. Die aus zwei Leitungen bestehende Stromversorgungsleitung 110 ist einerseits mit einer stationären bzw. zentralen Steuereinheit 1000 und andererseits mit einer auf dem wenigstens einen Trennelement 1 vorgesehenen lokalen Steuereinheit 100 verbunden, die insbesondere der Steuerung des auf dem Laufwerk 2 angeordneten Elektromotors 15 und gegebenenfalls der Steuerung eines Antriebs 130 einer Verriegelung für das Trennelement 1 dient. Die Verbindung der Stromversorgungsleitung 110 mit der lokalen Steuereinheit 100 erfolgt in der vorliegenden Ausgestaltung des Laufwerks 2 über die mit einer Montageplatte 112 verbundenen Kontaktstifte 111 und eine in einem Kanal 214 des Laufwerks 2 vorgesehene Verbindungsleitung 113. Durch diesen oder einen weiteren Kanal 214 ist eine weitere Verbindungsleitung 131 geführt, mittels der die lokale Steuereinheit 100 mit dem gegebenenfalls vorhandenen Antrieb 130 für die Verriegelung verbunden ist. Die Verbindung der Steuereinheit 100 mit dem Elektromotor 15 und einem Sensor 150, mittels dessen die Drehungen und die Drehrichtung des Rotors des Elektromotors 15 erfasst werden, erfolgt über eine weitere Verbindungsleitung 114.

Der mit dem Elektromotor 15 verbundene Sensor 150 ist vorzugsweise ein Hallsensor, der beispielsweise zwischen dem Rotor und einem Dauermagneten angeordnet ist, der ein Magnetfeld senkrecht zum Hall-Element liefert, das von einem elektrischen Strom durchflossen ist. Ändert durch die Bewegung des Rotors die Feldstärke des Magnetfeldes werden die Elektronen, die von einer an das Element angelegten Längsspannung getrieben werden, senkrecht zur Stromrichtung stärker abgelenkt. Dadurch entsteht die im Millivoltbereich liegende Hall-Spannung, die der lokalen Steuereinheit 100, vorzugsweise gewandelt auf einen Logikpegel, zugeführt und dort ausgewertet wird, um die Drehungen des Motors 15 und die entsprechende Verschiebung des Trennelements 1 festzuhalten.

Die zentrale Steuereinheit 1000 ist mit einer Bedienungseinheit 120 verbindbar, mittels der die Vorrichtung initialisiert werden kann. In der Bedienungseinheit 120 ist eine Speichereinheit 121 vorgesehen, in der vorzugsweise Textbausteine abgelegt sind, die durch Kurzzeichen, die von der zentralen Steuereinheit 1000 übertragen werden, abrufbar sind, so dass sich in der zentralen Steuereinheit 1000 der Speicherbedarf reduziert. Weiterhin kann die zentrale Steuereinheit 1000 mit zusätzlichen externen Geräten, beispielsweise Sensoren, verbunden werden.

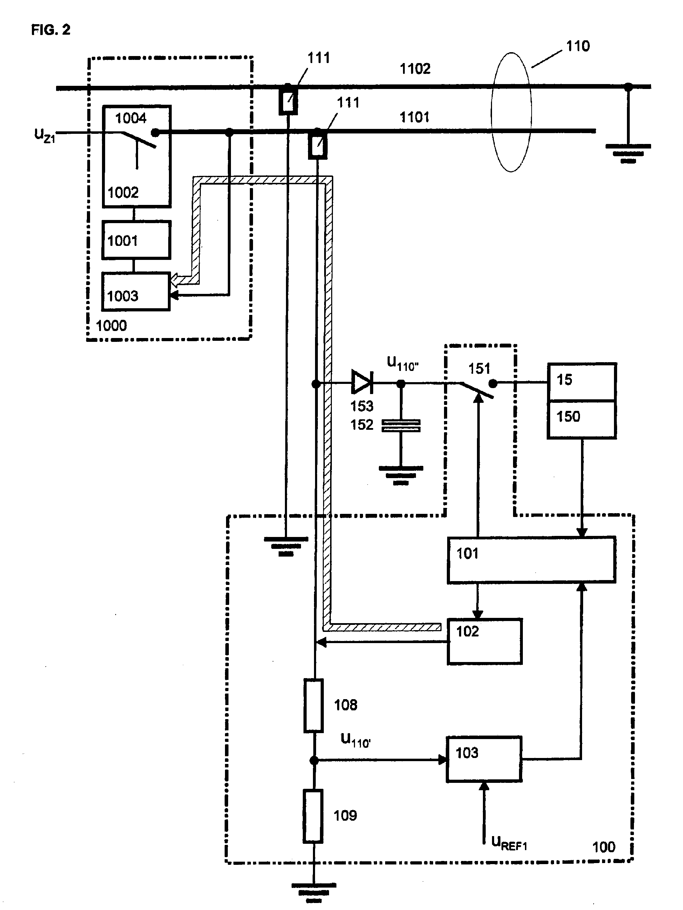

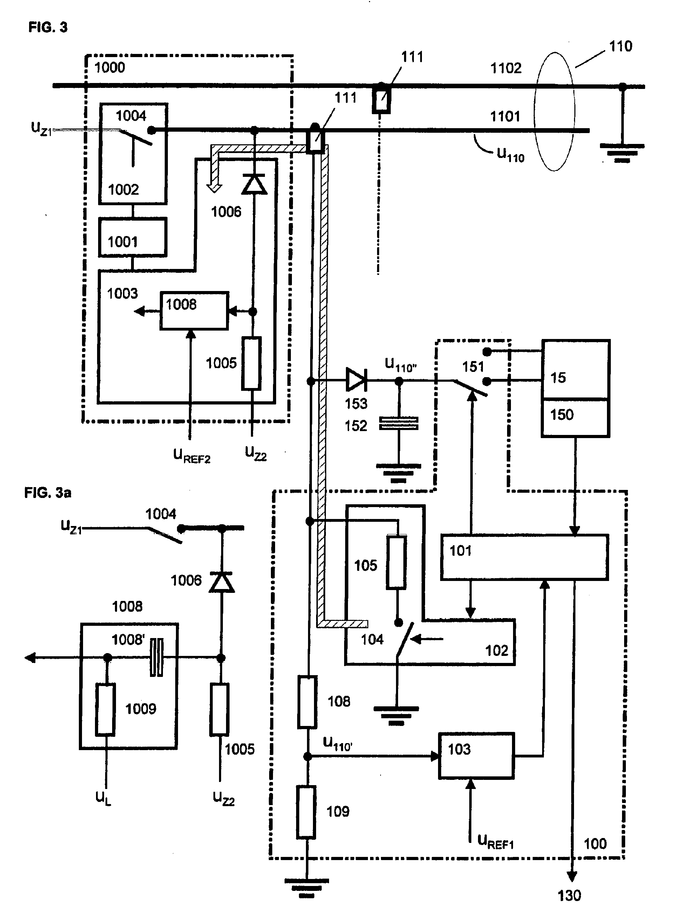

Der weitere Aufbau der Steuereinheiten 1000, 100 und das erfindungsgemässe Steuerungsverfahren wird nachstehend anhand der Figuren 2 und 3 erläutert.

Wie in Figur 2 gezeigt, weist die zentrale Steuereinheit 1000 einen Prozessor 1001 auf, der mit einer Sende- und einer Empfangseinheit 1002, 1003 verbunden ist. Die Sendeeinheit 1002 weist einen zentralen Schalter 1004 auf, mittels dessen eine erste Gleichspannung u_{Z1}, beispielsweise 40V, an die Leiter 1101, 1102 der Stromversorgungsleitung 1101 zuschaltbar ist. Wie bereits erwähnt, ist die lokale Steuereinheit 100 jedes Trennelements 1 mittels Kontaktstiften 111 mit der Stromversorgungsleitung 110 verbunden. Mit der an der Stromversorgungsleitung 110 anliegenden Spannung u₁₁₀ wird über eine Diode 153 ein Kondensator 152 geladen, der mittels eines ersten lokalen Schalters 151 mit dem Elektromotor 15 verbindbar ist. Sofern der zentrale Schalter 1004 permanent geschlossen ist, sind die Spannung u₁₁₀ an der Stromversorgungsleitung 110 und die Spannung U₁₁₀,, am Kondensator 152, die als Betriebsspannung für den Elektromotor 15 dient, gleich der ersten Gleichspannung u_{Z1}. Durch den Kondensator 152 wird die Betriebsspannung u_{110''} für den Elektromotor 15 auch dann praktisch konstant gehalten, wenn der lokale Schalter 1004 für die Übertragung von Daten kurzzeitig geöffnet wird. Die Diode 153 verhindert dabei ein Entladen des Kondensators 153 in Richtung zur Stromversorgungsleitung 110, wenn die daran anliegende Spannung u₁₁₀ absinkt.

Die Übertragung von Daten von der zentralen zur lokalen Steuereinheit 1000 bzw. 100 erfolgt erfindungsgemäss über die Stromversorgungsleitung 110, indem der zentrale Schalter 1004 entsprechend den zu übertragenden digital vorliegenden Daten geöffnet und geschlossen wird. Die Detektion der übertragenen Daten erfolgt in der lokalen Steuereinheit 100 vorzugsweise durch die Überwachung einer Spannung u_{110'}, die an einem aus zwei Widerständen 108, 109 gebildeten Spannungsteiler anliegt, durch den die Stromversorgungsleitung 110 lokal abgeschlossen wird. Die am Spannungsteiler 108, 109 anliegende Spannung u₁₁₀, wird in einer lokalen Empfangseinheit 103 vorzugsweise anhand eines Komparators, beispielsweise eines Operationsverstärkers, mit einer Referenzspannung u_{REF1} verglichen, so dass Spannungsänderungen detektierbar und entsprechende Signale dem lokalen Prozessor 101 zuführbar sind. In Abhängigkeit der vorliegenden Instruktionen kann der lokale Prozessor 101 den ersten lokalen Schalter 151 bzw. den Elektromotor 15 betätigen oder, währenddem der zentrale Schalter 1004 geöffnet ist, Daten zur zentralen Steuereinheit 1000 übertragen.

Für die Übertragung von Daten von der lokalen zur zentralen Steuereinheit 100, 1000 kann ein beliebiges Verfahren angewendet werden. Besonders vorteilhaft kann diese Übertragung jedoch mit der in Figur 3 gezeigten Vorrichtung realisiert werden, bei der die Stromversorgungsleitung 110 über eine Diode 1006 und einen Widerstand 1005 permanent mit einer zweiten Gleichspannung u_{z2} (beispielsweise 24V, u_{z2} < u_{z1}) verbunden ist, die an der Stromversorgungsleitung 110 anliegt, sobald der zentrale Schalter 1004 geöffnet ist. An die Stromversorgungsleitung 110 ist in der lokalen Steuereinheit 100 ein lokaler Widerstand 105 mittels eines zweiten lokalen Schalters zuschaltbar, der von der lokalen Sendeeinheit 102 in Abhängigkeit der zu übertragenden Daten betätigbar ist. Durch die über die Stromversorgungsleitung 110 miteinander verbundenen lokalen und zentralen Widerstände 105, 1005 wird daher, nach dem Schliessen des lokalen Schalters 104 ein Spannungsteiler 105, 1005 gebildet, so dass die Spannung u₁₁₀ an der Stromversorgungsleitung 110 gegenüber der zweiten Gleichspannung u_{z2} absinkt (u_{z2} > u₁₁₀). Änderungen der Spannung u₁₁₀ an der Stromversorgungsleitung 110 können in der zentralen Empfangseinheit 1003 beispielsweise mittels eines Komparators 1008 und einer zweiten Referenzspannung u_{REF2} detektiert und im zentralen Prozessor 1001 in entsprechende Daten gewandelt werden.

Figur 3a zeigt eine zentrale Empfangseinheit 1008 mit einem Kondensator 1008', der einerseits über den Widerstand 1005 mit der zweiten Gleichspannung u_{z2} und andererseits über einen Widerstand 1009 mit einer Logikspannung u_{L} verbunden ist. Sofern keine Daten übertragen werden, wird der Kondensator auf die Spannungsdifferenz u_{Z2} - u_{L} geladen. Falls der zentrale Schalter 1004 nun geöffnet und der zweite lokale Schalter 104 geschlossen wird, ändert die eingangsseitig am Kondensator 1008' anliegende Spannung und somit auch die Spannung am Ausgang der Empfangseinheit 1008. Spannungsänderungen können daher lokal und zentral anhand einer von mehreren Methoden detektiert werden.

Für die Codierung und Übertragung der Daten werden Übertragungsprotokolle vorgesehen, anhand derer die empfangenen Signale korrekt interpretiert und Kollisionen bei der Datenübertragung bzw. Mehrfachzugriffe vermieden werden können. Von der zentralen Steuereinheit 1000 werden beispielsweise Datenrahmen asynchron übertragen, die ein Startbit und ein oder mehrere Stoppbits aufweisen. Die Übertragung von den lokalen zur zentralen Steuervorrichtung 100, 1000 kann bereits während des Empfangs des Stoppbits oder innerhalb von Zeitfenstern erfolgen, das nach Übermittlung des Datenrahmens vorgesehen und den einzelnen lokalen Steuereinheiten beispielsweise fest zugeordnet sind. Beispielsweise erfolgt die Antwort auf eine mit einem Datenrahmen übermittelte Anfrage nachfolgend innerhalb des nächsten Datenrahmens oder innerhalb eines Zeitfensters, das einer lokalen Steuereinheit 100 speziell zugeordnet wurde.

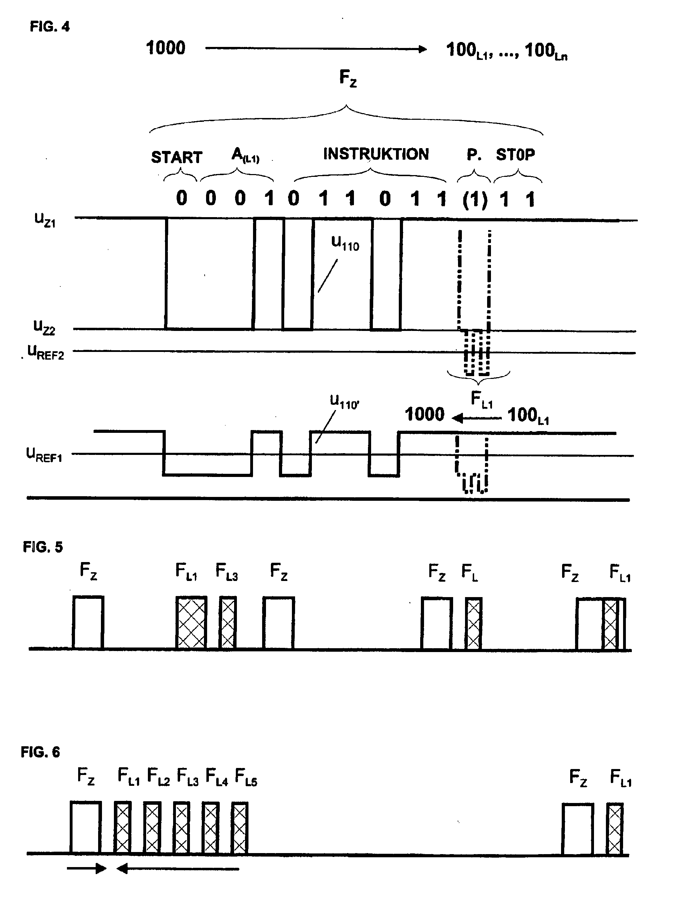

Ein Beispiel einer Übertragung von Daten zwischen der zentralen Steuereinheit 1000 und den lokalen Steuereinheiten 100 ist in Figur 4 gezeigt. Von der zentralen Steuereinheit 1000 wird durch Betätigung des zentralen Schalters 1004 ein Datenrahmen F_{z} mit einem Startbit, drei Adressbits, sechs Datenbits (z.B. eine Instruktion), einem Parity-Bit und zwei Stoppbits übertragen. Für die Übertragung von Datenbits = 0 wird der zentrale Schalter 1004 geöffnet, so dass die Spannung u₁₁₀ an der Stromschiene 110 von der ersten Gleichspannung u_{z1} auf die zweite Gleichspannung u_{z2} absinkt. Zu beachten ist nun, dass die Betriebsspannung u₁₁₀, am Kondensator 151 höher ist, als die Spannung u₁₁₀ an der Stromschiene 110, so dass die Diode 152 sperrt und den Kondensator 151 von der Stromschiene 110 trennt. Figur 4 zeigt somit den Verlauf der Spannung u₁₁₀ an der Stromschiene 110 während der Übertragung des Datenrahmens F_{z}. Durch Betätigung des zweiten lokalen Schalters 104, können während Perioden, in denen die zweite Gleichspannung u_{z2} an der Stromschiene 110 anliegt oder in denen Datenbits = 0 zur lokalen Steuereinheit 100 übertragen werden, Daten zur zentralen Steuereinheit 1000 übertragen werden (möglich ist natürlich eine vorgängige Inversion, so dass der Schalter bei Datenbit = 1 geöffnet ist). D.h., die lokalen Steuereinheiten 100 können bereits bei Detektion des Startbits Daten aussenden. Um Kollisionen zu vermeiden, kann die zentrale Steuereinheit 1000 im gesendeten Datenrahmen F_{z} die Adresse der lokalen Steuereinheit 100 einfügen, von der eine Antwort erwartet wird. Diese lokale Steuereinheit 100 kann daher nach Detektion ihrer Adresse bereits Daten innerhalb des Rahmens an der Position eines (oder mehrerer) entsprechend zugeordneten Bits oder innerhalb eines folgenden Rahmens oder Zeitfensters übertragen, wodurch die Spannung u₁₁₀ an der Stromschiene 110 bei Übertragung eines entsprechenden Datenbits reduziert wird. Beispielsweise kann anstelle des Parity-Bits stets ein "Abfragebit" gleicher Polarität (Schalter 1004 offen) gesendet werden, das von den lokalen Steuereinheiten 100 als Sendefenster benutzt wird. In der zentralen Steuereinheit 1000 können die entsprechenden Daten durch einen Vergleich der Spannung u₁₁₀ an der Stromschiene 110 mit einer zweiten Referenzspannung U_{REF2} detektiert werden.

Figur 5 zeigt die asynchrone Übertragung von Datenrahmen F_{z} zu den lokalen Steuereinheiten 100 und deren Antworten F_{L} ausserhalb oder innerhalb der Datenrahmen F_{z}. Die lokalen Steuereinheiten 100 werden darin vorzugsweise zu Antworten aufgefordert.

Figur 6 zeigt die synchrone Übertragung von Datenrahmen F_{Z} , F_{L1}, F_{L2}, ... zwischen der zentralen und den lokalen Steuereinheiten 1000, 100. Möglich ist jedoch auch eine semisynchrone Übertragung von Daten, bei der Datenrahmen von der zentralen Steuereinheit 1000 asynchron gesendet und die Zeitfenster für die Abgabe der Daten von den lokalen Steuereinheiten 100 beispielsweise in festen individuellen Abständen vom Stoppbit des empfangenen Datenrahmens F_{z} vorgesehen werden.

Das erfindungsgemässe Verfahren zur Initialisierung der Vorrichtung wird nachfolgend im Detail beschrieben. Auf der Bedienungseinheit 120 erhält der Anwender die Instruktion, die Trennelemente 1A, ..., 1D aus dem Parkraum vollständig auszufahren. Anschliessend folgt die Instruktion, die Trennelemente 1A - 1B - 1C - 1D in der korrekten Reihenfolge manuell in Richtung des Parkraums P zu bewegen. Die Bewegungen der einzelnen Trennelemente 1A - 1B - 1C - 1D werden mittels des Sensors 150 festgestellt und von der betreffenden lokalen Steuereinheit 100 zur zentralen Steuereinheit 1000 gemeldet.

Die zentrale Steuereinheit 1000 kann daher die Rangnummer der lokalen Steuereinheit bzw. des betreffenden Trennelements 1A registrieren und dieser eine Adresse zuordnen, die zentral und lokal abgespeichert wird. Die Adressierung der Trennelemente 1A, ..., 1D kann daher in kurzer Zeit und in einfacher Weise durchgeführt werden, ohne dass Eingriffe in die Vorrichtung notwendig ist.

Durch das manuelle Verschieben der Trennelemente 1A, ..., 1D wird der zentralen Steuereinheit 1000 ferner die Richtung angezeigt, in die die Trennelemente 1A, ..., 1D hin zur zugehörigen Parkposition verschoben werden, so dass die einzelnen Trennelemente 1A, ..., 1D jeweils in korrekter Richtung, bei mehreren Parkräumen gegebenenfalls in unterschiedlichen Richtungen, aus dem zugehörigen Parkraum P aus- oder in den zugehörigen Parkraum P eingefahren werden können.

Innerhalb des Parkraums werden die Trennelemente 1A, ..., 1D mittels der zentralen Steuereinheit 1000 sequentiell gegen einen zugehörigen inneren Endanschlag gefahren, der gegebenenfalls durch ein benachbartes Trennelement 1 gebildet wird. Dadurch kann die Endposition jedes Trennelements 1A, ..., 1D innerhalb des Parkraums und durch die anschliessende Überwachung der Rotordrehungen des Antriebsmotors 15, 150 dessen jeweilige Position ausserhalb des Parkraums präzise bestimmt werden. In vorzugsweisen Ausgestaltungen wird diese Information verwendet, um die Fahrgeschwindigkeit der Trennelemente 1A, ..., 1D vor Erreichen der Zielposition, gegebenenfalls eines Endanschlags, zu reduzieren oder die Trennelemente 1A, ..., 1D bedarfsweise zu positionieren.

Nach der Ermittlung der Endpositionen im Parkraum werden die Trennelemente 1A, ..., 1D von der zentralen Steuereinheit 1000 aus dem Parkraum ausgefahren bis sie auf einen zugehörigen äusseren Endanschlag, beispielsweise ein benachbartes Trennelement 1 oder einen Anschlag der eine Öffnung begrenzt, auftreffen. Da der zentralen Steuereinheit 1000 die Position des betreffenden äusseren Endanschlags noch nicht bekannt ist, erfolgen diese Initialisierungsfahrten mit reduzierter Geschwindigkeit. Nach Durchführung der beschriebenen Initialisierungsfahrten sind zumindest in der zentralen Steuereinheit 1000, vorzugsweise auch in den lokalen Steuereinheiten 100, die Adressen, die Reihenfolge und Verschieberichtungen der Trennelemente 1A, ..., 1D sowie die Positionen der jeweiligen inneren und äusseren Endanschläge und die jeweiligen Positionen der Trennelemente 1A, ..., 1D (an oder zwischen den Endanschlägen) gespeichert. Zumindest bei Abschaltung der Anlage werden diese Daten vorzugsweise in einem nichtflüchtigen Speicher abgelegt. Bei einem Datenverlust sind die entsprechenden Initialisierungsfahrten zu wiederholen. Bei Wiederinbetriebnahme der bereits initialisierten Vorrichtung werden die gespeicherten Positionen der beispielsweise an einem inneren oder äusseren Endanschlag anliegenden Trennelemente 1A, ..., 1D vorzugsweise verifiziert, indem sie gegen den betreffenden Endanschlag gefahren werden.

Für den Betrieb der Vorrichtung werden jedoch noch weitere Daten benötigt, mittels derer Kollisionen bei der Ausfahrt der Trennelemente 1A, ..., 1D aus dem Parkraum vermieden werden können. Dazu werden die nach der ersten Initialisierungsphase an den äusseren Endpositionen anliegenden Trennelemente 1A, ..., 1D, wie in Figur 9 gezeigt, von der zentralen Steuereinheit 1000 mit einer vorgegebenen Geschwindigkeit v und vorbestimmten zeitlichen Abständen t1 hin zur zugehörigen Parkposition befördert. Dabei werden die zeitlichen Abstände t2 ihrer Ankunft an den Parkpositionen registriert und zentral oder lokal speichert. Die Ankunft eines Trennelements 1A kann anhand des Sensors 150 festgestellt werden, der ein entsprechendes Signal abgibt, sobald das Trennelement 1A auf einen Anschlag trifft und der Rotor des Elektromotors 15 stoppt. Mit dieser Methode können entsprechende Endschalter oder weitere Sensoren vermieden und entsprechende Kosten gespart werden.

Beim Betrieb der Vorrichtung werden die Trennelemente 1A, ..., 1D mit den derart ermittelten zeitlichen Abständen t2 bzw. Verzögerungen aus den Parkpositionen ausgefahren. Dazu kann die zentrale Steuereinheit 1000 sequentiell jedes einzelne Trennelement 1A, ..., 1D steuern. Sofern die den Trennelementen 1A, ..., 1D individuell zugeordneten Verzögerungszeiten t2_{1A}, t2_{1B}, ... in den lokalen Steuereinheiten 100 gespeichert sind, können diese nach einem von der zentralen Steuereinheit 1000 übermittelten Startsignal die eigene Abfahrtszeit bestimmen.

Mit diesem Initialisierungsverfahren entfällt die aufwendige Parametrierung der Vorrichtung, die nur von entsprechend instruiertem Personal vorgenommen werden kann. Zusätzlich werden bei diesem Verfahren Parameter berücksichtigt, beispielsweise spezielle Kurvenfahrten, die bei der bekannten Parametrierung kaum berücksichtigt werden können. Sofern einzelne Parameter trotzdem eingegeben werden, können die dazu korrespondierenden Initialisierungsfahrten unterbleiben.

Die erfindungsgemässe Vorrichtung und das Steuerungsverfahren wurden in bevorzugten Ausgestaltungen beschrieben und dargestellt. Anhand der erfindungsgemässen Lehre sind jedoch weitere fachmännische Ausgestaltungen realisierbar. Insbesondere sind verschiedene Protokolle für Codierungen und synchrone oder asynchrone Datenübertragungen anwendbar. Zu beachten ist, dass zwischen der zentralen Steuereinheit 1000 und den lokalen Steuereinheiten 100 nur relative kleine Datenmengen übertragen werden, so dass problemlos weitere Funktionalitäten realisierbar sind. Obwohl in den Steuereinheiten 100, 1000 vorzugsweise nur ein Prozessor 101, 1001 vorgesehen ist, können auch mehrere Prozessoren eingesetzt werden, denen verschiedene Funktionalitäten zugeordnet werden. Möglich ist natürlich auch die weitgehende Integration der Sende- und Empfangseinheiten in die Prozessoren 1001, 101. Beispielsweise können in den Prozessoren 1001, 101 leistungsfähige Treiber für die lokalen und zentralen Schalter 1004, 104, 151 und/oder Komparatoren integriert sein. Anstelle der Dioden 153 und 1006 können zusätzliche Schalter verwendet werden. Ferner sind verschiedene Stromversorgungseinrichtungen und Elektromotoren verwendbar, die entsprechend beschaltet werden, damit die gewünschten Drehzahlen und Drehrichtungen resultieren. Zur Änderung der Drehrichtung kann die Betriebsspannung u_{110' '} beispielsweise an einen entsprechenden Anschluss angelegt werden. Die erfindungsgemässe Steuervorrichtung und das Steuerverfahren sind selbstverständlich auch für andere Laufwerke und Antriebssysteme, beispielsweise auch bei der aus der EP 0 953 706 A1 bekannten Vorrichtung vorteilhaft anwendbar.

### Bezugszeichenliste:

- 1: Trennelement mit Laufwerk und Platte 72
- 1000: zentrale Steuereinheit
- 1001: zentraler Prozessor
- 1002: zentrale Sendeeinheit
- 1003: zentrale Empfangseinheit
- 1004: zentraler Schalter
- 1005: zentraler Widerstand
- 1006: Diode
- 1008: Komparator
- 1008': Kondensator
- 1009: Widerstand
- 100: lokale Steuereinheit
- 101: lokaler Prozessor
- 102: lokale Sendeeinheit
- 103: lokale Empfangseinheit
- 104: lokaler Schalter
- 105: lokaler Widerstand
- 108, 109: Spannungsteiler
- 110: Stromversorgungsleitung mit Leitungen 1101, 1102
- 1101: geschaltete Leitung
- 1102: geerdete Leitung
- 111: elastisch gehaltene Kontaktstifte
- 112: Montageplatte
- 113: im Kanal 214 geführte Verbindungsleitung
- 114: Leitung zu Elektromotor 15 und Sensor 150
- 120: Bedienungseinheit
- 121: Speichereinheit mit Text
- 130: Schlossantrieb
- 131: Leitung zum Schlossantrieb
- 140: externe Steuer- und Kommunikationsvorrichtungen
- 15: Elektromotor
- 150: Sensor, z.B. Hallsensor
- 16: Getriebe
- 160: Antriebswelle
- 161: Zahnrad
- 2: Laufwerk mit Antriebsmotor
- 21: Fahrwerkseinheit des Laufwerks 2
- 211: Laufräder an der Fahrwerkseinheit 21
- 212: Welle für die Laufräder 211
- 213: Kopfstück
- 214: Kanäle zur Durchführung elektrischer Leitungen
- 215: untere Führungselemente an der Fahrwerkseinheit 21
- 218: Kontaktierungsmodul
- 22: Antriebseinheit des Laufwerks 2
- 23: Führungseinheit
- 24: Verbindungselement bzw. in der Fahrwerkseinheit 21 drehbar gehaltene Schraube
- 3: Laufschiene
- 3a,3b,3c: Teile der Laufschiene 1
- 32: Lauffläche für die Laufräder 211
- 34: Führungskanal zur Aufnahme der oberen Führungselemente
- 36: Führungskanal zur Aufnahme der unteren Führungselemente
- 4: Holz-, Metall- Kunststoff und/oder Glasplatte
- 41: Montageprofil, Befestigungsvorrichtung
- 414: Stromversorgungsleitungen
- 415: Kanäle für die federgestützten Kontaktstifte 411
- 416: Schraube zur Montage des Kontaktierungsmoduls 41
- 417: Federelemente
- 42: Steuermodul
- 422: Blech, Abschirmung
- 421: Steuerleitungen
- 43: Elektromotor
- 431: Hallelement
- 44: Getriebe
- 5: Zahnriemen

## Patentansprüche

1. Vorrichtung mit wenigstens einem steuerbaren Trennelement (1), das mittels eines in einer Schiene (3) der Vorrichtung geführten Laufwerks (2) gehalten und mittels eines Elektromotors (15) der Vorrichtung angetrieben ist, der mittels einer zentralen Steuereinheit (1000) der Vorrichtung und einer am Trennelement (1) angeordneten lokalen Steuereinheit (100) der Vorrichtung steuerbar ist, die je einen zentralen bzw. lokalen Prozessor (1001; 101) aufweisen und die Daten über eine in der Schiene (3) angeordnete elektrische Leitung (110), austauschen, die der Stromversorgung des Elektromotors (15) dient, **dadurch gekennzeichnet, dass** in der zentralen Steuereinheit (1000) eine erste Gleichspannung (u_{z1}) vorgesehen ist, die primär der Stromversorgung des Elektromotors (15) dient und die mit der Stromversorgungsleitung (110) über einen zentralen Schalter (1004) verbindbar ist, der von einer zentralen Sendeeinheit (1002) in Abhängigkeit der von der zentralen Steuereinheit (1000) zur lokalen Steuereinheit (100) zu übertragenden Daten betätigbar ist und dass in der lokalen Steuereinheit (100) eine lokale Empfangseinheit (103) vorgesehen ist, die der Detektion von Änderungen der an der Stromversorgungsleitung (110) anliegenden Spannung (u₁₁₀) geeignet ist, welche durch den lokalen Prozessor (101) in die entsprechenden Daten wandelbar sind, der mit einem ersten lokalen Schalter (151) verbunden ist, mittels dessen die an der Stromversorgungsleitung (110) anliegende Spannung (u₁₁₀) mit dem Elektromotor (15) verbindbar ist.

2. Vorrichtung nach Anspruch 1, **dadurch gekennzeichnet, dass** in der lokalen Steuereinheit (1000) eine lokale Sendeeinheit (102) vorgesehen ist, mittels der, während Intervallen, in denen der zentrale Schalter (1004) geöffnet ist, über die Stromversorgungsleitung (110) Daten zu einer in der zentralen Steuereinheit (1000) vorgesehenen zentralen Empfangseinheit (1003) übertragbar sind.

3. Vorrichtung nach Anspruch 2, **dadurch gekennzeichnet, dass** in der zentralen Steuereinheit (1000) eine zweite Gleichspannung (u_{z2}) über einen zentralen Widerstand (1005) permanent mit der Stromversorgungsleitung (110) verbunden ist, an die in der lokalen Steuereinheit (100) ein lokaler Widerstand (105) mittels eines zweiten lokalen Schalters (104) zuschaltbar ist, der von der lokalen Sendeeinheit (102) in Abhängigkeit der zu übertragenden Daten betätigbar ist.

4. Vorrichtung nach Anspruch 3, **dadurch gekennzeichnet, dass** die zentrale Empfangseinheit (1003) zur Detektion von Änderungen der an der Stromversorgungsleitung (110) anliegenden Spannung (u₁₁₀) geeignet ist, welche anhand des zentralen Prozessors (1001) in die entsprechenden Daten gewandelt werden.

5. Vorrichtung nach einem der Ansprüche 1 - 4, **dadurch gekennzeichnet, dass** in der zentralen und oder in der lokalen Empfangseinheit (1003, 103) ein Komparator vorgesehen ist, der die an der an der Stromversorgungsleitung (110) anliegende oder eine dazu proportionale Spannung (u₁₁₀, u_{110'}) mit einer Referenzspannung (u_{REF1}) vergleicht.

6. Vorrichtung nach einem der Ansprüche 1 - 5, **dadurch gekennzeichnet, dass** die an der Stromversorgungsleitung (110) anliegende Spannung (u₁₁₀) in der lokalen Steuereinheit (100) über eine Diode (151) an einen Kondensator (152) angelegt wird, der über den ersten lokalen Schalter (151) mit dem Elektromotor (15) verbindbar ist.

7. Vorrichtung nach einem der Ansprüche 1 - 6, **dadurch gekennzeichnet, dass** der Elektromotor (15) mit einem Sensor (150), gegebenenfalls einem Hallsensor, versehen ist, mittels dessen die Drehungen und die Drehrichtung des Rotors und somit der zurückgelegte Weg des Trennelements (1) und das Auftreffen auf ein Hindernis, einen Endanschlag oder ein benachbartes Trennelement (1B) messbar sind.

8. Verfahren zur Steuerung einer Vorrichtung nach Anspruch 1 aufweisend wenigstens ein Trennelement (1), das mittels eines in einer Schiene (3) geführten Laufwerks (2) gehalten und mittels eines Elektromotors (15) angetrieben wird, mit einer zentralen Steuereinheit (1000) und einer mit dem Trennelement (1) verbundenen lokalen Steuereinheit (100), die je mittels eines zentralen bzw. lokalen Prozessors (1001; 101) Daten über eine Stromversorgungsleitung (110) austauschen, die der Stromversorgung des Elektromotors (15) dient, **dadurch gekennzeichnet, dass** in der zentralen Steuereinheit (1000) eine erste Gleichspannung (u_{Z1}) vorgesehen ist, die mit der Stromversorgungsleitung (110) über einen zentralen Schalter (1004) verbindbar ist, der von einer zentralen Sendeeinheit (1002) in Abhängigkeit der von der zentralen Steuereinheit (1000) zur lokalen Steuereinheit (100) zu übertragenden Daten betätigt wird und dass in der lokalen Steuereinheit (100) eine lokale Empfangseinheit (103) vorgesehen ist, die zur Detektion von Änderungen der an der Stromversorgungsleitung (110) anliegenden Spannung (u₁₁₀) geeignet ist, welche anhand eines lokalen Prozessors (101) in die entsprechenden Daten gewandelt werden, der mit einem ersten lokalen Schalter (151) verbunden ist, mittels dessen die an der Stromversorgungsleitung (110) anliegende Spannung (u₁₁₀) mit dem Elektromotor (15) verbindbar ist.

9. Verfahren nach Anspruch 8, **dadurch gekennzeichnet, dass** in der lokalen Steuereinheit (1000) eine lokale Sendeeinheit (102) vorgesehen ist, mittels der, während Intervallen, in denen der zentrale Schalter (1004) geöffnet ist, über die Stromversorgungsleitung (110) Daten zu einer in der zentralen Steuereinheit (1000) vorgesehenen zentralen Empfangseinheit (1003) übertragen werden.

10. Verfahren nach Anspruch 9, **dadurch gekennzeichnet, dass** in der zentralen Steuereinheit (1000) eine zweite Gleichspannung (u_{z2}) über einen zentralen Widerstand (1005) permanent mit der Stromversorgungsleitung (110) verbunden ist, an die in der lokalen Steuereinheit (100) ein Widerstand (105) mittels eines zweiten lokalen Schalters (104) zuschaltbar ist, der von der lokalen Sendeeinheit (102) in Abhängigkeit der zu übertragenden Daten betätigt wird.

11. Verfahren nach Anspruch 10, **dadurch gekennzeichnet, dass** die zentrale Empfangseinheit (1003) Änderungen der an der Stromversorgungsleitung (110) anliegenden Spannung (u₁₁₀) detektiert, welche entsprechend einem zweiten Übertragungsprotokoll anhand eines zentralen Prozessors (1001) in die entsprechenden Daten gewandelt werden.

12. Verfahren nach einem der Ansprüche 8 bis 11, **dadurch gekennzeichnet, dass** von der zentralen Steuereinheit (1000) Datenpakete zur lokalen Steuereinheit (100) übertragen werden, die ein durch temporäres Öffnen des zentralen Schalters (1004) erzeugtes Startbit aufweisen.

13. Verfahren nach Anspruch 12, **dadurch gekennzeichnet, dass** die wenigstens eine lokale Steuereinheit (100), gegebenenfalls nach Abfrage, innerhalb oder ausserhalb eines gesendeten Datenpakets (F_{Z}), während des Auftretens von Bits, wie dem Startbit, oder innerhalb von synchron oder asynchron auftretenden, den lokalen Steuereinheiten (100) generell oder individuell zugeordneten Zeitfenstern (F_{L}; F_{L1}, F_{L2}, ...), in denen der zentrale Schalter (1004) geöffnet ist, wenigstens ein Datenbit zur zentralen Steuereinheit (1000) überträgen kann.

14. Verfahren zur Steuerung der mit mehreren Trennelementen (1A, ..., 1N) versehenen Vorrichtung nach einem der Ansprüche 8 bis 13, **dadurch gekennzeichnet, dass** zur Initialisierung der Vorrichtung die Trennelemente (1A, ..., 1N) einzeln in der vorgegebenen Reihenfolge manuell vorzugsweise gegen die ihnen zugeordnete Parkposition bewegt werden, was mittels des Sensors (150) festgestellt und von der lokalen Steuereinheit (100) zur zentralen Steuereinheit (1000) gemeldet wird, die die Rangnummer der lokalen Steuereinheit (100) und deren Verschiebungsrichtung zur Parkposition registriert und dieser eine Adresse zuordnet, die in der zentralen und der lokalen Steuereinheit (1000; 100) abgespeichert wird.

15. Verfahren nach Anspruch 14, **dadurch gekennzeichnet, dass** die zentrale Steuereinheit (1000) sequentiell jedes Trennelement (1A; ...; 1N) gegen einen Anschlag fährt, um eine innere Endposition zu bestimmen und dass die zentrale Steuereinheit (1000) die Trennelemente (1A, ..., 1N) aus dem Parkraum ausfährt, bis sie auf einen Anschlag auftreffen, der als äussere Endposition registriert wird, wonach anhand der jedem Trennelement (1A; ...; 1N) zugeordneten inneren und äusseren Endpositionen jeweils dessen Position innerhalb des Fahrwegs bestimmt und dieses entsprechend gesteuert wird, insbesondere um vor Erreichen der Zielposition, gegebenenfalls eines Anschlags, die Fahrgeschwindigkeit zu reduzieren.

16. Verfahren nach Anspruch 14 oder 15, **dadurch gekennzeichnet, dass** die zentrale Steuereinheit (1000) die Trennelemente (1A, ..., 1N) von den äusseren Endpositionen mit einer vorgegebenen Geschwindigkeit und vorbestimmten Abständen hin zur zugehörigen Parkposition befördert und die zeitlichen Abstände (t2_{1A}, t2_{1B}, ...) ihrer Ankunft an den inneren Endpositionen registriert, in der zentralen und/oder der wenigstens einen lokalen Steuereinheit (1000; 100) speichert, wonach diese zeitlichen Abstände (t2_{1A}, t2_{1B}, ...) für die Verzögerung der Ausfahrt der Trennelemente (1A, ..., 1N) aus den Parkpositionen verwendet werden, um dortige Kollisionen zu vermeiden.

## Claims

1. Device with at least one controllable divider element (1) which is held by a drive assembly (2) retained within a rail (3) of the device and driven by an electric motor (15) of the device, which is controllable by a central control unit (1000) of the device and a local control unit (100) of the device located at the divider element (1), each of which comprises a central respectively local processor (1001; 101) and which exchange data via an electric line (110) that is provided in the rail (3) and that serves for supplying energy to the electric motor (15), **characterized in that** in the central control unit (1000) a first direct voltage (u_{Z1}) is provided that serves primarily for supplying energy to the electric motor (15) and that is connectable to the power supply line (110) via a central switch (1004), which can be actuated by a central transmission unit (1002) in function of the data to be transmitted from the central control unit (1000) to the local control unit (100) and that in the local control unit (100) a local receiving unit (103) is provided, which is capable of detecting changes in the voltage (u₁₁₀) present on the power supply line (110), which are convertible into the corresponding data by the local processor (101), which is connected to a first local switch (151) by which the voltage (u₁₁₀) present on the power supply line (110) is connectable to the electric motor (15).

2. Device according to claim 1, **characterized in that** a local transmission unit (102) is provided in the local control unit (100), with which, during intervals in which the central switch (1004) is opened, data can be transmitted via the power supply line (110) to a central receiving unit (1003) provided in the central control unit (1000).

3. Device according to claim 2, **characterized in that** in the central control unit (1000) a second direct voltage (u_{z2}) is permanently connected via a central resistor (1005) to the power supply line (110) to which a local resistor (105) is connectable by a second local switch (104) that is provided in the local control unit (100) and that is actuatable by the local transmission unit (102) in function of the data to be transmitted.

4. Device according to claim 3, **characterized in that** the central receiving unit (1003) is capable of detecting changes in the voltage (u₁₁₀) that is present on the power supply line (110) which are converted by the central processor (1001) into the corresponding data.

5. Device according to one of claims 1 - 4, **characterized in that** a comparator is provided in the central and/or in the local receiving unit (1003, 103), which compares the voltage present on the power supply line (110) or a voltage proportional thereto (u₁₁₀, u_{110'}) with a reference voltage (U_{REF1}).

6. Device according to one of claims 1 - 5, **characterized in that** the voltage (u₁₁₀) present on the power supply line (110) is applied in the local control unit (100) via a diode (153) to a capacitor (152), which is connectable via the first local switch (151) to the electric motor (15).

7. Device according to one of claims 1 - 6, **characterized in that** the electric motor (15) is provided with a sensor (150), optionally a Hall sensor, by which the rotations and the rotational direction of the rotor, and thus the path travelled by the divider element (1) and the impact on an obstacle, an end stop or a neighbouring divider element (1B) can be measured.

8. Method for controlling a device according to claim 1 that comprises at least one divider element (1) which is held by a drive assembly (2) that is guided within a rail (3) and that is driven by means of an electric motor (15), with a central control unit (1000) and a local control unit (100) that is connected to the divider element (1), which central control unit (1000) and local control unit (100) exchange data each by means of a central respectively local processor (1001; 101) via a power supply line (110) that serves for supplying energy to the electric motor (15), **characterized in that** a first direct voltage (uZ1) is provided in the central control unit (1000) that is connectable to the power supply line (110) via a central switch (1004), which is actuated by a central transmission unit (1002) in function of the data to be transmitted from the central control unit (1000) to the local control unit (100) and that a local receiving unit (103) is provided in the local control unit (100), which is capable of detecting changes in the voltage (u110) present on the power supply line (110), which are converted into the corresponding data by a local processor (101), which is connected to a first local switch (151) by which the voltage (u₁₁₀) present on the power supply line (110) is connectable to the electric motor (15).

9. Method according to claim 8, **characterized in that** in the local control unit (100) a local transmission unit (102) is provided by which data are transmitted via the power supply line (110) to a central receiving unit (1003) provided in the central control unit (1000) during intervals in which the central switch (1004) is opened.

10. Method according to claim 9, **characterized in that** in the central control unit (1000) a second direct voltage (u_{z2}) is permanently connected via a central resistor (1005) to the power supply line (110) to which a local resistor (105) is connectable by a second local switch (104) provided in the local control unit (100), which is actuated by the local transmission unit (102) in function of the data to be transmitted.

11. Method according to claim 10, **characterized in that** the central receiving unit (1003) detects changes in the voltage (u₁₁₀) present on the power supply line (110), which are converted by a central processor (1001) according to a second transmission protocol to the corresponding data.

12. Method according to one of claims 8 - 11, **characterized in that** data packets are transmitted by the central control unit (1000) to the local control unit (100), which comprise a start bit generated by temporarily opening the central switch (1004).

13. Method according to claim 12, **characterized in that** the at least one local control unit (100) can transmit at least one data bit to the central control unit (1000), optionally upon interrogation, inside or outside a transmitted data paket (F_{z}), during the occurrence of bits, such as the start bit, or within synchronously or asynchronously occurring time windows (F_{L}; F_{L1}, F_{L2}, ...), which are assigned generally or individually to the local control unit (100) and in which the central switch (1004) is opened.

14. Method to control the device provided with multiple divider elements (1A, ..., 1N), in particular, according to one of Claims 8 - 13, **characterized in that** in order to initialize the device the divider elements (1A, ..., 1N) are moved individually in the predetermined sequence manually, preferably towards the assigned park position, which is detected by the sensor (150) and is reported by the local control unit (100) to the central control unit (1000), which records the rank number of the local control unit (100) and its displacement direction relative to the park position, and which assigns an address to the rank number that is stored in the central and the local control unit (1000; 100).

15. Method according to Claim 14, **characterized in that** the central control unit (1000) moves each divider element (1A; ...; 1N) sequentially towards a stop in order to determine an inner end position, and that the central control unit (1000) drives the divider elements (1A, ..., 1N) out of the parking space until they meet a stop, which is recorded as the outer end position, after which, based on the inner and outer end positions assigned to each divider element (1A; ...; 1N), the position of the divider element (1A; ...; 1N) within the travel path is determined and the divider element (1A; ...; 1N) is controlled accordingly, particularly in order to reduce the travel speed before reaching the target position, possibly a stop.

16. Method according to Claims 14 or 15, **characterized in that** the central control unit (1000) transports the divider elements (1A, ..., 1N) from the outer end positions at a predetermined speed and predetermined distances towards the associated park position, records and stores the time intervals (t2_{1A}, t2_{1B}, ...) of their arrival at the inner end positions in the central and/or the at least one local control unit (1000; 100), whereafter these time intervals (t2_{1A}, t2_{1B}, ...) are used to delay driving the divider elements (1A, ..., 1N) out of the park positions in order to avoid local collisions.

## Revendications

1. Dispositif comprenant au moins un élément de séparation commandable (1) qui est maintenu au moyen d'un organe de roulement (2) guidé dans une glissière (3) du dispositif et entraîné au moyen d'un moteur électrique (15) du dispositif, moteur qui est commandable au moyen d'une unité de commande centrale (1000) du dispositif et une unité de commande locale (100) du dispositif, disposée sur l'élément de séparation (1), lesquelles présentent chacune un processeur central resp. local (1001 ; 101) et échange les données par une ligne électrique (110) disposée dans le rail (3), laquelle sert à l'alimentation électrique du moteur électrique (15), **caractérisé en ce qu'**il est prévu dans l'unité de commande centrale (1000) une première tension continue (U_{Z1}) qui sert de manière primaire à l'alimentation électrique du moteur électrique et qui peut être reliée à la ligne d'alimentation de courant (110) par un interrupteur central (1004) qui peut être actionnable par une unité centrale d'émission (1002) en fonction des données à transférer par une unité centrale d'émission (1000) à l'unité locale de commande (100), et **en ce qu'**il est prévu dans l'unité locale de commande (100) une unité locale de réception (103) qui est appropriée à la détection de modification de la tension (u₁₁₀) appliquée à la ligne d'alimentation électrique (110), données qui peuvent être converties par le processeur local (101) dans les données correspondantes, qui est relié à un premier interrupteur local (151) au moyen duquel la tension (u₁₁₀) appliquée à la ligne d'alimentation électrique (110) est reliée au moteur électrique (15).

2. Dispositif selon la revendication (1), **caractérisé en ce qu'**il est prévu dans l'unité de commande locale (100) une unité locale d'émission (102) au moyen de laquelle, pendant des intervalles, dans lesquels l'interrupteur central (1004) est ouvert, des données peuvent être transmises par la ligne d'alimentation électrique (110) à une unité de réception centrale (1003) prévue dans l'unité de commande centrale (1000).

3. Dispositif selon la revendication 2, **caractérisé en ce que** dans l'unité de commande centrale (1000), une seconde tension continue (u_{Z2}) est reliée par une résistance centrale (1005) de manière permanente à la ligne d'alimentation électrique (110) à laquelle il est possible de brancher dans l'unité de commande locale (100) une résistance locale (105) au moyen d'un second interrupteur local (104), qui est actionnable par l'unité locale d'émission (102) en fonction des données à transférer.

4. Dispositif selon la revendication 3, **caractérisé en ce que** l'unité centrale de réception (1003) est appropriée pour la détection des modifications de la tension (u₁₁₀) appliquée à la ligne d'alimentation électrique (110), modifications qui a sont transformée en les données correspondantes à l'aide du processeur central (1001).

5. Dispositif selon l'une des revendications 1 à 4, **caractérisé en ce qu'**il est prévu dans l'unité centrale ou dans l'unité local de réception (1003, 103) un comparateur qui compare la tension appliquée à la ligne d'alimentation électrique (110) ou une tension proportionnelle (u₁₁₀, u_{110'}) à une tension de référence (U_{REF1}).

6. Dispositif selon l'une des revendications 1 à 5, **caractérisé en ce que** la tension (u₁₁₀) appliquée à la ligne d'alimentation électrique (110) est appliquée dans l'unité de commande locale (100) par une diode (151) à un condensateur (152), qui est reliable par le premier interrupteur local (151) au moteur électrique (15).

7. Dispositif selon l'une des revendications 1 à 6, **caractérisé en ce que** le moteur électrique (15) est muni d'un capteur (150) éventuellement d'un capteur à effet d'hall, au moyen duquel les rotations et le sens de rotation du rotor et ainsi le trajet parcouru de l'élément de séparation (1) et l'impact contre un obstacle, une butée de fin de cloison et un élément de séparation voisin sont mesurables

8. Procédé pour la commande d'un dispositif selon la revendication 1 présentant au moins un élément de séparation (1) qui est maintenu au moyen d'un organe de roulement (2) guidé dans une glissière (3) du dispositif et entraîné au moyen d'un moteur électrique (15) avec une unité centrale de commande (1000) et une unité locale de commande (100) reliée à l'élément de séparation (1), qui échangent chacune des données au moyen d'un processeur local ou central (1001 ; 101) par une ligne d'alimentation électrique (110), laquelle sert à l'alimentation électrique du moteur électrique (15), **caractérisé en ce qu'**il est prévu dans l'unité de commande centrale (1000) une première tension continue (U_{Z1}) qui peut être reliée à la ligne d'alimentation de courant (110) par un interrupteur central (1004) qui est actionné par une unité centrale d'émission (1002) en fonction des données à transférer par une unité centrale d'émission (1000) à l'unité locale de commande (100), et **en ce qu'**il est prévu dans l'unité locale de commande (100) une unité locale de réception (103) qui est appropriée à la détection de modification de la tension (u₁₁₀) appliquée à la ligne d'alimentation électrique (110), données qui peuvent être converties en données correspondantes par un processeur local (101), qui est relié à un premier interrupteur local (151) au moyen duquel la tension (u₁₁₀) appliquée à la ligne d'alimentation électrique (110) au moteur électrique (15).

9. Procédé selon la revendication 8, **caractérisé en ce qu'**il est prévu dans l'unité de commande locale (100) une unité locale d'émission (102) au moyen de laquelle, pendant des intervalles, dans lesquels l'interrupteur central (1004) est ouvert, des données peuvent être transmises par la ligne d'alimentation électrique (110) à une unité de réception (1003) centrale prévue dans l'unité de commande centrale (1000).

10. Procédé selon la revendication 9, **caractérisé en ce que** dans l'unité de commande centrale (1000) une seconde tension continue (u_{z2}) est reliée par une résistance centrale (1005) de manière permanente à la ligne d'alimentation électrique (110) à laquelle il est possible de brancher dans l'unité de commande locale (100) une résistance locale (105) au moyen d'un second interrupteur local (104), qui est actionnable par l'unité locale d'émission (102) en fonction des données à transférer.

11. Procédé selon la revendication 10, **caractérisé en ce que** l'unité centrale de réception (1003) est appropriée pour la détection des modifications de la tension (u₁₁₀) appliquée à la ligne d'alimentation électrique (110), qui sont transformées par un processeur central (1001) selon un deuxième protocole de transmission en données correspondantes.

12. Procédé selon l'une des revendications 8 à 11, **caractérisé en ce que** l'unité centrale de commande (1000) transfère des paquets de données à l'unité de commande locale (100), qui présentent un bit de départ généré par une ouverture temporaire de l'interrupteur central (1004).

13. Procédé selon la revendication 12, **caractérisé en ce qu'**au moins une unité locale de commande (100) peut transmettre au moins un bit de données à l'unité de commande centrale (1000) éventuellement après consultation, à l'intérieur ou à l'extérieur d'un paquet de données émis (F_{Z}), pendant la survenance de bits, tel que le bit de départ ou à l'intérieur de fenêtres de temps (F_{L}; F_{L1}, F_{L2}, ...) synchrones ou asynchrone, attribuées de manière générale ou individuelle aux unités de commande locales (100), fenêtres dans lesquelles l'interrupteur central (1004) est ouvert.

14. Procédé pour la commande du dispositif muni de plusieurs éléments de séparation (1A, ..., 1N) selon l'une des revendications 8 à 13, **caractérisé en ce que** pour l'initialisation du dispositif, les éléments de séparation (1A, ..., 1N) sont déplacés séparément manuellement dans l'ordre prescrit de préférence en direction de la position de parking qui leur est attribuée, ce qui est constaté par le capteur (150) et signalé par l'unité locale de commande (100) à l'unité centrale de commande (1000) qui enregistre le numéro de rang de l'unité locale de commande (100) et sa direction de déplacement par rapport à la position de parking et l'associe à une adresse qui est stockée dans l'unité centrale et dans l'unité locale de commande (1000 ; 100).

15. Procédé selon la revendication 14, **caractérisé en ce que** l'unité centrale de commande (1000) séquentiellement de chaque élément de séparation ((1A, ..., 1N) vient en butée pour définir une position finale interne et **en ce que** l'unité centrale de commande (1000) sort les éléments de séparation (1A, ..., 1N) de l'espace de garage jusqu'à ce qu'ils atteignent une butée qui est enregistrée comme position finale externe selon laquelle à l'aide des positions de fin de course internes et externes associées à chaque élément de séparation (1A, ..., 1N), respectivement leur position est définie à l'intérieur du trajet et le commande en conséquence, en particulier pour réduire la vitesse de déplacement avant d'attendre la position ciblée, éventuellement une butée.

16. Procédé selon la revendication 14 ou 15, **caractérisé en ce que** l'unité centrale de commande (1000) transporte les éléments de séparation (1A, ..., 1N) de leurs positions externes finales à une vitesse prédéterminée et à des intervalles prédéfinis à la position de parking respective et enregistrent les intervalles temporelles (t-2_{1A}, t2_{1B}, ...) de leur arrivée aux positions internes finales, les stocke dans l'unité centrale de commande et/ou au moins une unité locale de commande (1000 ; 100), selon quoi des intervalles temporels (t2_{1A}, t2_{1B}, ...) sont utilisés pour retarder la sortie des éléments de séparation 1A, ..., 1N) de leurs positions de parking pour éviter des collisions locales.
